# EUROPEAN PATENT SPECIFICATION

(11) **EP 0 717 409 B1**
(45) Date of publication and mention of the grant of the patent: **26.08.1998**
(21) Application number: 95308738.4
(22) Date of filing: 04.12.1995
(51) Int. Cl.: G11B 23/02, G11B 23/30, G11B 23/40, G11B 23/38, G11B 33/06, G11B 33/10, G11B 33/12, G06F 1/16

(54) **Disk medium drive apparatus equipped with display function and display method for the same**
Plattenantriebsgerät mit Anzeige
Appareil d'entraînement à disque équipé d'un dispositif et procédé d'affichage

(30) Priority: 12.12.1994 JP 307309/94
(43) Date of publication of application: 19.06.1996
(73) Proprietor: Hitachi, Ltd., Chiyoda-ku, Tokyo 101-0062 (JP)
(72) Inventor: Kodama, Koji, Odawara-shi (JP); Uchida, Hideo, Hadano-shi (JP); Kizaki, Kunihiko, Hadano-shi (JP); Nishida, Hiroshi, Oisomachi, Naka-gun, Kanagawa-ken (JP)
(74) Representative: Calderbank, Thomas Roger

(56) References cited:
- EP-A- 0 252 646
- EP-A- 0 332 170
- WO-A-93/00680

## Description

The present invention relates to a disk-type storage device which includes a rotatable disk serving as a memory medium and which constitutes one of peripheral units of a computer. More particularly, the invention is concerned with a disk-type storage device equipped with a display element. With the phrases "disk-type storage", or "disk medium drive apparatus", "disk drive" and the like used herein, it is contemplated to conceptually encompass a magnetic disk drive also known as the hard disk drive, a magneto-optical disk drive, an optical disk drive and the like.

There prevails an increasing trend of implementing computers in more and more small size, e.g. from a desk-top computer to a lap-top computer, a notebook size computer and hence to a pocketbook size computer. In accompanying the trend mentioned above, the magnetic disk drives on the market tend to be more and more miniaturized, e.g. from 3.5-inch size to 2.5-inch size, to 1.8-inch size and thence to 1.3-inch size. The optical disk drive is also attempted to be implemented in a smaller structure as with the case of the magnetic disk drive. In the following description, the magnetic disk drive, the magneto-optical disk drive, the optical disk drive and the like are generally referred to as the disk-type storage device or simply as the disk drive.

On the way to miniaturization of the disk drives, there has been developed a removable-type disk drive which is adapted to be mounted in a memory card slot and which is thus referred to as the card-type disk drive. Concerning the removable mounting mechanism and packaging techniques for the card-type disk drive, reference may be made to, for example, U.S. Patent No. 5,062,016 filed May 5, 1986, JP-A-5-181565 and JP-A-4-356785.

Further, as the typical standards for standardizing the card-type disk drives inclusive of electrical connection (interfaces), there may be mentioned standardized specifications or standards for computer-dedicated IC memory cards established through cooperation of the JEIDA (Japan Electronic Industry Development Association) and the PCMCIA (Personal Computer Memory Card International Association). Initially, in establishing the standards mentioned above, side the disk drive is put aside from the consideration. At present, however, the standards are so expanded as to cover the disk drive and the like in accompanying the increasing trend to miniaturization of the disk drive.

On the other hand, as the transportable data storage media for storing documents, programs and the like and used in information processing systems, there may generally be mentioned floppy disks, magneto-optical disks, removable disks and the like. There are commercially available floppy disks of 3.5-inch size whose storage capacities differ over a wide range, e.g. ca. 0.64 MB (megabytes), 0.75 MB, 1.2 MB, 1.44 MB, 2.8 MB and 20 MB. By contrast, the magneto-optical disks on the market have large storage capacities of 125 MB, 256 MB and 512 MB. The removable disk is a sort of magnetic disk which is so implemented as to be removable from the disk drive. The capacities of the removable disks are generally of 40 MB, 80 MB, 120 MB, 250 MB and 500 MB.

Since the transportable data storage media such the magneto-optical disk and the removable disk drive have the storage capacities far greater than that of the floppy disk and allow the data stored therein to be accessed with a high speed, the amount of information (number of records) such as documents, programs, images, pictures, etc. stored in the transportable data storage media except for the floppy disk is apt to increase. Under the circumstances, it is desirable to provide such facility which allows the operator to recognize easily or conveniently the contents of information stored in the transportable data storage media of large storage capacities.

In conjunction with the transportable data storage devices as well as the data storing disk media, there have also been developed techniques or facilities for storing the data corresponding to the directory information and/or facility for displaying the data mentioned above. Typical examples of such transportable data storage are disclosed in JP-A-62-57167, JP-A-3-46180, JP-A-3-212877, JP-A-4-6685, JP-A-4-254976, JP-A-6-43970, JP-A-6-119752, JP-A-62-137786 and JP-A-63-266680.

However, the transportable data storage media disclosed in the publications enumerated above are directed to the floppy disks, optical disk cartridges and the magnetic disk cartridges which are not imparted with any drive function such as implemented by a disk rotating unit, a data write/read head, a head positioning unit, a data write/read circuit and an input/output unit for the data to be written or read out.

Under the circumstances, the transportable data storage media have to be additionally provided with an input/output unit dedicated to the data to be displayed in order to realize the facility for storing the data corresponding to the directory information and/or the display function. As a consequence of this, the transportable data storage media become very expensive, which is, of course, undesirable from the economical viewpoint.

Parenthetically, the technique disclosed in JP-A-6-119752 is directed to the floppy disks and the like. Although it is mentioned that the teachings as disclosed in the above publication can be applied to the magnetic disk drive (hard disk drive) and the optical disk drive, the publication neither teaches nor suggests any techniques for realizing such approaches, not to say of any technical developments.

Furthermore, from the utterly different viewpoint, i.e., from the standpoint of maintenance of the disk drive, it is desirable or necessary to allow the operator (operator in charge of maintenance) to know the information of the disk drives which were put into use, by connecting them to an hierarchically high rank information processing system.

In the light of the state of the art described above, it is a preferred aim of the present invention to provide a novel and improved disk drive (i.e., disk medium drive apparatus) which allows the operator to display and confirm the contents of recorded data of a disk medium of a large capacity, information concerning the history of usage thereof and/or operators' memoranda in a convenient manner without aid of an external information processing system of a higher rank (hereinafter referred to as the hierarchically higher rank system) to which the disk drive is to be connected while evading the necessity of providing additionally an input/output unit dedicated for inputting/outputting the data which are inherently destined for display.

Another preferred aim of the present invention is to realize the display function of the disk drive with a relatively lower power consumption.

Yet another preferred aim of the present invention is to realize the display function of concern while protecting the ordinary operation (or throughput) of the disk drive against degradation.

In view of the above and other aims which will become more apparent as the description proceeds, there is provided according to an aspect of the present invention a disk medium drive apparatus which is comprised of a semiconductor memory for storing a part or all of data recorded in a predetermined data recording area on a relevant disk medium, a functional module for updating the data stored in the semiconductor memory in linkage with the updating (renewal) of the data on the disk medium, a display element for displaying the data of the semiconductor memory, a control switch for controlling start of display of the data, move of a data displaying area and ending of the display, and a display power source for accommodating the data display function.

With the arrangement described above, there arises no necessity of additionally providing an input/output unit dedicated for inputting/outputting the data to be displayed. Besides, the information as stored can be displayed by the disk drive by itself without need for connection of the disk drive to a hierarchically higher rank system, which is, of course, advantageous from the viewpoint maintenance. Furthermore, since the data stored in the predetermined memory area on the semiconductor memory are constantly updated together with a part or all of the data recorded in the predetermined data recording area on the disk medium, the display of the data or other manipulation thereof can be realized solely by reading the data from the predetermined memory area of the semiconductor memory, which in turn means that the display of the data or other manipulation thereof can be realized with a power source of a relatively small capacity.

In a preferred mode for carrying out the invention, a connector conforming to the PCMCIA or other standards may be provided for the disk drive of the structure described above. In that case, the disk drive transported in the removed state is imparted with the display function, which is, of course, convenient for the operator.

In a disk drive of the structure described above, the data recorded in the predetermined data recording area on the disk medium may preferably include information concerning the contents of the data recorded on the disk medium, history of records of the disk or memoranda of the operator. In that case, history of the file managements performed in the past for a large amount of recorded data on the disk medium is made available, whereby useless or wasteful work such as search of files already erased or deleted can be avoided. Moreover, such information which indicates a data transfer from a given disk medium to other one as performed by the operator can be displayed, which is very convenient for the operator. Additionally, upon periodical maintenance, predetermined maintenance information of the hierarchically higher rank system or the disk drive can be displayed as the history information, which is, of course, convenient to the operator.

In the disk drive of the structure described hereinbefore, the display element for displaying the data stored in the predetermined memory area may preferably be constituted by a liquid crystal panel while the power source dedicated for the display may preferably be constituted by a solar cell. In that case, the function of reading out the data from the predetermined memory area of the semiconductor memory, which data are constantly updated in linkage with updating of a part or all of the data recorded in the predetermined data recording area on the disk medium, and displaying the data as read out on the liquid crystal panel can be ensured stably. By using the solar cell, maintenance for the display-dedicated power source can be made unnecessary, to another advantage.

In the disk medium drive apparatus according to the invention mentioned previously, it is preferred to mount the display element above a major electronic circuit substrate mounted in facing a head/disk assembly of the disk drive on a surface located in opposition to the head/disk assembly and cover the major circuit substrate with a protection cover having a display window formed at a position corresponding to that of the display element. With such arrangement, it is possible to mount a display element of a relatively large size favorable for visual recognition with a simplified structure.

In another preferred mode for carrying out the invention, a part or all of the data recorded in the predetermined recording area on the disk medium are read out in the state connected to the hierarchically higher rank system to thereby store the data in the predetermined memory area of the semiconductor memory or update the data stored in the predetermined area upon ending of drive operation of the disk drive, whereupon the disk drive is removed from the hierarchically higher rank system. In that case, the information concerning the data stored in the disk medium can be presented to the operator by correspondingly manipulating the switch. By virtue of the arrangement described above, a part or all of the data recorded in the predetermined data recording area on the disk medium and updated in the state connected to the hierarchically higher rank system can be stored in the predetermined memory area of the semiconductor memory. Thus, the display function can be accomplished with a display dedicated power source of a relatively small capacity because it is sufficient to read out only the data stored in the predetermined memory area of the semiconductor memory.

In this conjunction, such arrangement may preferably be adopted that the disk drive is removed from the hierarchically higher rank system, whereupon the disk medium is rotated by an electric power supplied from a battery or other type cell fitted on the disk drive by manipulating the switch to thereby rotate only temporarily the disk medium for allowing a part or all of the data recorded in the predetermined data recording area of the disk medium to be read out to thereby present the information concerning the data stored in the disk medium to the operator. Thus, in the case where the disk drive has a room for accommodating the power source, it is possible to renewedly rotate the disk medium under the power supply from the battery or cell mounted on the disk drive by manipulating correspondingly the switch in the removed state of the disk drive. In that case, the data updating operation to be carried out in the state connected to the hierarchically higher rank apparatus can be spared. In this manner, the circuit configuration for preventing the throughput from being lowered can easily be realized.

Besides, because of availability of the electric power of the cell, it is possible to drive the disk medium and/or the data write/read head, which makes it easy to realize the content display function.

The above and other aims, features and attendant advantages of the present invention will more easily be understood by reading the following description of the preferred embodiments thereof taken, only by way of example, in conjunction with the drawings.

In the course of the description which follows, reference is made to the drawings, in which:
Fig. 1 is an isometric view showing a card-type disk drive according to a first embodiment of the present invention, as viewed obliquely from the bottom side thereof;
Fig. 2 is an isometric view showing a card-type disk drive according to a second embodiment of the present invention, as viewed from the bottom side thereof;
Fig. 3 is a top plan view showing a hitherto known card-type disk drive;
Fig. 4 is a bottom plan view showing the hitherto known card-type disk drive;
Fig. 5 is a block diagram showing a structure of a hypothetical card-type disk drive to aid understanding of the invention;
Fig. 6 is a block diagram showing a structure of a card-type disk drive according to a first embodiment of the present invention;
Fig. 7 is a block diagram showing a structure of a card-type disk drive according to a second embodiment of the present invention;
Fig. 8 is a view for illustrating a procedure for displaying index data in the card-type disk drive according to the first embodiment of the present invention;
Fig. 9 is a view for illustrating a procedure for displaying index data in the card-type disk drive according to the second embodiment of the present invention;
Fig. 10 is a view for illustrating index display (i.e., display of index data) in the card-type disk drive according to the first (or second) embodiment of the present invention; and
Fig. 11 is an exploded perspective view for illustrating a circuit substrate packaging in the card-type disk drive according to the first embodiment of the present invention.

Now, the present invention will be described in detail in conjunction with what is presently considered as preferred or typical embodiments thereof by reference to the drawings.

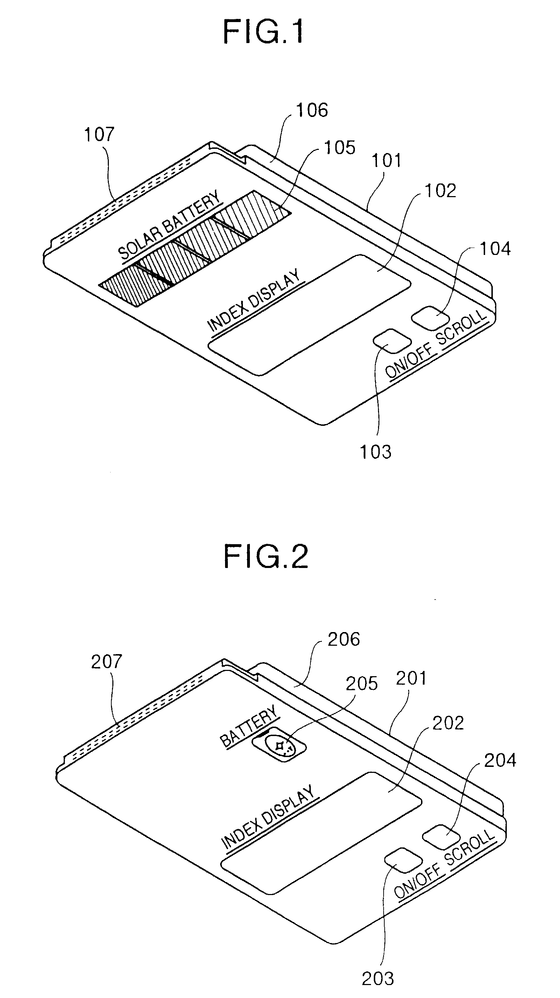

Figure 1 shows a card-type disk drive 101 according to a first embodiment of the invention as viewed obliquely from the bottom side thereof. The card-type disk drive 101 now under consideration is implemented in conformance with the provision "Type 3" stipulated in the PCMCIA (Personal Computer Memory Card International Association) Standards. However, the invention is never restricted to such specific type but can find application to other types of disk drives such as those of the 3.5-inch size and 2.5-inch size for enhancing the maintenance quality thereof.

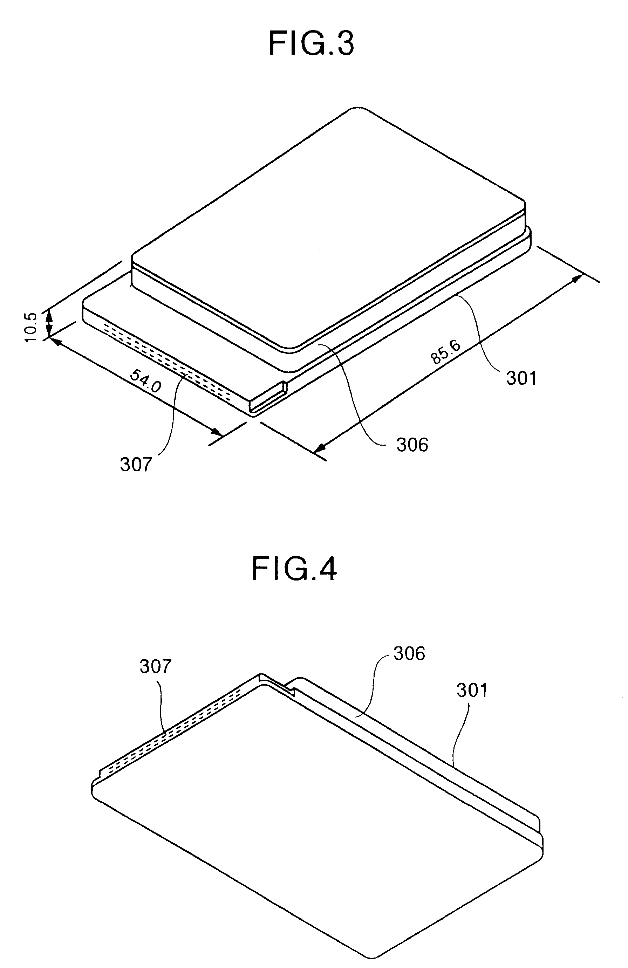

Figures 3 and 4 are perspective views showing a hitherto known card-type disk drive 301 conforming to "Type 3" stipulated in the PCMCIA Standards as viewed obliquely from the top and bottom sides thereof, respectively.

Each of the card-type disk drives mentioned above is adapted to be electrically and mechanically connected or coupled to an external information processing apparatus serving as a hierarchically higher rank system by way of interface connectors 107, 207, 307, respectively, for transferring electric power as well as data signals and control signals with the external information processing apparatus. Reference characters 106, 206, 306 designate head disk assemblies, respectively, each of which includes a disk medium, a read/write head for effecting information read/write operation on the disk medium through magnetic-electric (or electric-magnetic) conversion, a positioning mechanism of the read/write head and a read/write amplifier circuit.

As can be seen from the comparison of the isometric bottom view of Fig. 1 with that of Fig. 4, the card-type disk drive 101 according to the first embodiment of the invention has several features in outer appearance which the conventional card-type disk drive 301 lacks.

More specifically, in the card-type disk drive 101 according to the instant embodiment of the invention, there are additionally provided a liquid crystal display panel 102 for displaying information or indexes (directory information and file information) of the disk drive and a history of storages of information to the disk medium, an on/off switch 103 for determining whether or not the display is to be activated, a scroll switch 104 for scrolling contents as displayed, and a solar cell array 105.

At this juncture, it should be mentioned that the memory card conforming to the provision "Type 3" stipulated in the PCMCIA Standards has outer dimensions of 85.6 mm in length, 54.0 mm width and 10.5 mm in thickness.

In the case of the card-type disk drive 101 according to the first embodiment of the invention, display of the indexes on the liquid crystal display 102 is started or terminated (ended) by manipulating correspondingly the on/off switch 103. Location of the index generated on the liquid crystal display 102 can be moved with the aid of the scroll switch 104. Further, the electric power required for the index data display function is supplied from the solar cell array 105. In this conjunction, it should be mentioned that when a greater amount of electric power is demanded for implementing the index display function, a battery (e.g. nickel-hydrogen battery, lithium-ion battery or the like) may be employed in addition or solely. In that case, the battery may be charged when the disk drive is connected to the hierarchically higher rank system. Of course, terminals will have to be additionally provided for allowing the battery to be charged externally.

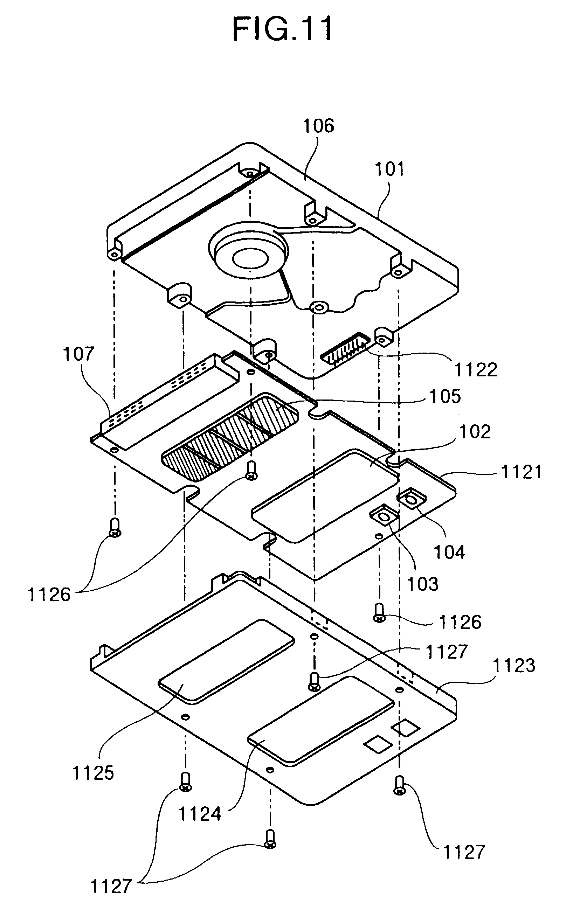

Figure 11 is an exploded perspective view for illustrating a circuit substrate packaging in the card-type disk drive according to the first embodiment of the present invention. A circuit substrate 1121 is disposed to face the head/disk assembly 106 and secured thereto by means of screws 1126, while circuits carried by the circuit substrate 1121 are connected to the circuits provided internally of the head/disk assembly 106 via a connector 1122. The circuit substrate 1121 incorporates therein all the circuits of the card-type disk drive 101 except for those provided internally of the head/disk assembly 106. In particular, the liquid crystal display panel 102, the solar cell array 105, the on/off switch 103 and the scroll switch 104 are mounted on the surface of the head/disk assembly 106 which is located at the side opposite to the circuit substrate 1121.

The circuit substrate 1121 is covered with a protection cover 1123 which is provided with a data display window 1124, a solar cell window 1125 and switch windows at positions corresponding to those of the liquid crystal display panel 102, the solar cell array 105, the on/off switch 103 and the scroll switch 104 on the circuit substrate 1121, respectively. Thus, the circuit substrate 1121 provides no obstacle to the data display, light reception and the switch manipulation.

Figure 2 is an isometric view showing a card-type disk drive 201 according to a second embodiment of the present invention in the state as viewed from the bottom side. One of the features of the card-type disk drive 201 in respect to the outer appearance is seen in that a cell 205 is provided, replacing the solar cell array 105. The electric power required for the index data display operation is supplied from the cell 205. Of course, a battery may be employed in place of the cell 205. In that case, the battery will have to be electrically charged when the disk drive is connected to the hierarchically higher rank system.

Operations involved in the index data display can be effected by means of the display on/off switch 203 and the scroll switch 204 as in the case of the card-type disk drive 101 according to the first embodiment of the invention.

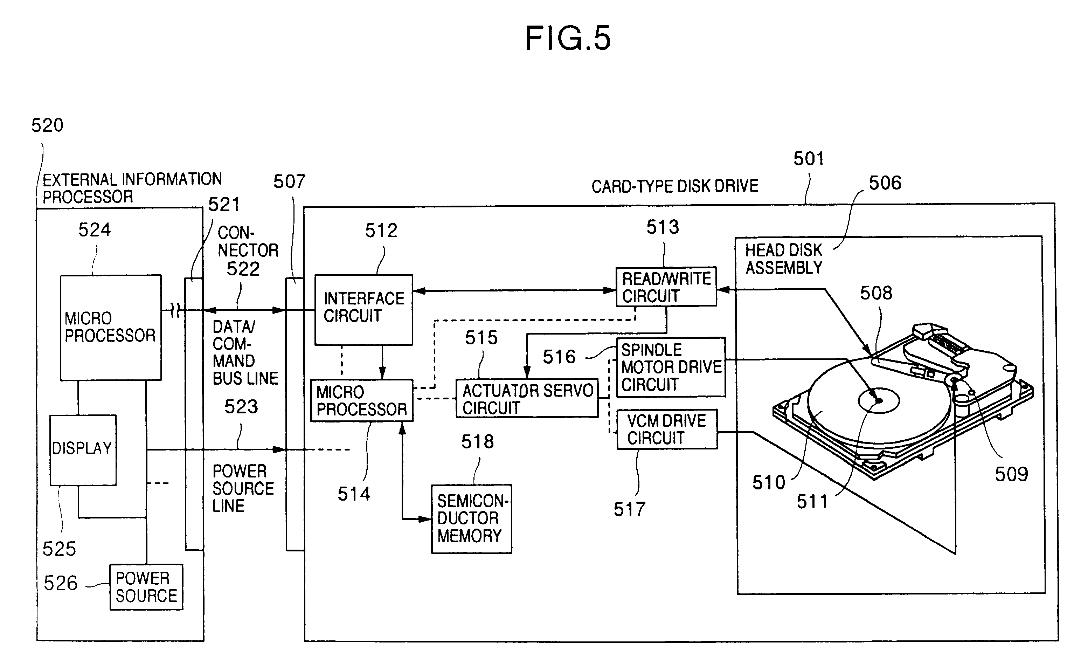

Figure 5 is a block diagram showing a structure of a hypothetical card-type disk drive to aid understanding of the invention. At first, it should be mentioned that the functional blocks which are common to those of the card-type disk drive 101 according to the first embodiment of the invention are omitted from the detailed description which follows.

In the case of this hypothetical card-type disk drive 501, data stored on a disk medium 510 can be read out by connecting an external information processing apparatus 520 (hierarchically higher rank system) to the card-type disk drive 501 and controlling the latter from the external information processing apparatus 520 by way of a data/command bus 522, to be thereby displayed on a display screen 525 of the external information processing apparatus 520 or printed out by a printer.

To say in another way, convention card-type disk drives are not in the position to display the information by themselves independently from the hierarchically higher rank system.

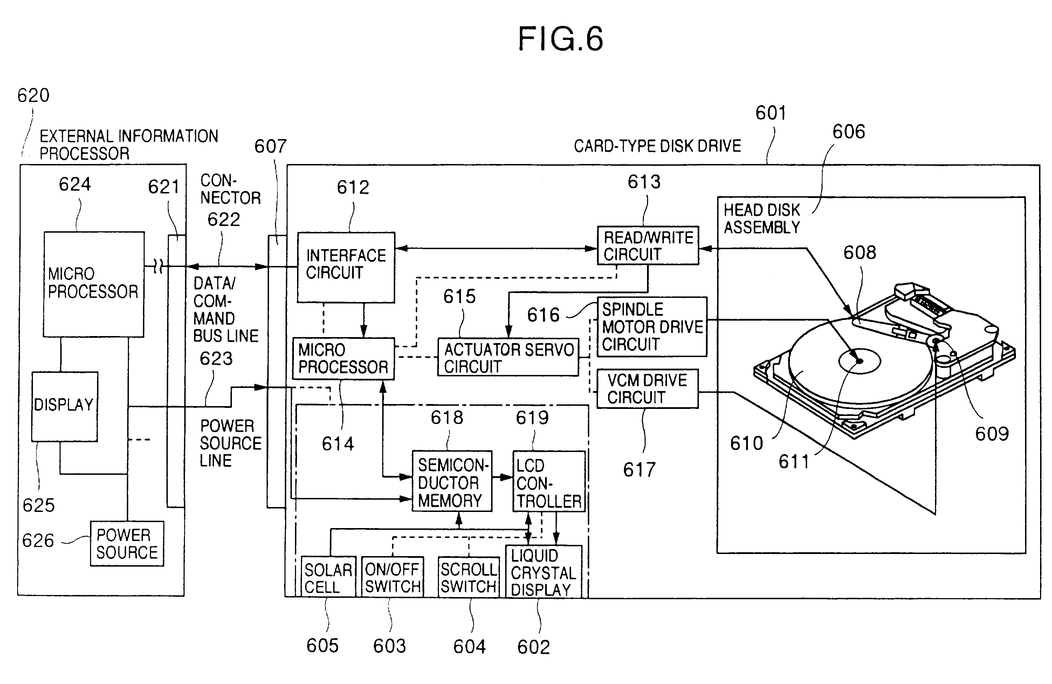

Figure 6 shows in a block diagram structures of the card-type disk drive 101 according to the first embodiment of the invention, a card-type disk drive 601 according to the second embodiment and an external information processing unit 620 to which the card-type disk drive 101 or the card-type disk drive 601 are adapted to be connected.

A head/disk assembly 606 of the card-type disk drive 601 is comprised of a disk medium 610, a spindle motor 611 for rotating the disk medium 610, a read/write head 608 for reading/writing data from/to the disk medium 610 through electromagnetic conversion of data signals and the like and a rotary actuator 609 for moving the read/write head 608 to a predetermined position on the disk medium 610 (i.e., for realizing the head positioning).

Ordinarily, the card-type disk drive 601 is electrically and mechanically connected or coupled to the external information processing apparatus 620 via interface connectors 607 and 621 so that the card-type disk drive 601 can be supplied with an electric power from the external information processing apparatus 620 via a power source line 623 while transferring to read/write data and the control commands with the external information processing apparatus 620 via a data/command bus 622.

In the case of the card-type disk drive 601, an interface circuit 612 is in charge of transferring the read/write data and the control commands with the external information processing apparatus 620 under the control of a microprocessor 614.

More specifically, in order to perform the read/write operation in cooperation with the head/disk assembly 606 in accordance with the read/write command supplied from the external information processing apparatus 620, the microprocessor 614 controls a driving current supplied to the spindle motor 611 from the spindle motor drive circuit 616 by way of the head positioning actuator servo circuit 615, to thereby rotate a disk medium 610 at a predetermined speed. Furthermore, the microprocessor 614 controls a driving current fed to a voice coil motor incorporated in the rotary actuator 609 from a voice coil motor drive circuit 617 via the head positioning actuator servo circuit 615 to thereby move the read/write head 608 for positioning it onto a relevant track. Additionally, the microprocessor 614 controls data transfer between the read/write circuit 613 and the read/write head 608 by controlling correspondingly the read/write circuit 613 and the read/write head 608, to thereby allow the data read/write operation to be effectuated at a predetermined sector position on the track.

On the other hand, the read/write circuit 613 supplies servo information read out from servo data fields of the individual sectors on the track to the head positioning actuator servo circuit 615.

Parenthetically, a portion of control program executed by the microprocessor 614 is stored as data in a nonvolatile semiconductor memory 618. Under the circumstances, in the case where modification or alteration of the control program is required, the external information processing apparatus executes a corresponding data updating processing on the nonvolatile semiconductor memory 618 of the card-type disk drive.

At this juncture, it is to be noted that in the case of the card-type disk drive 601 according to the first embodiment of the present invention, an additional memory area for the display function is secured in the nonvolatile semiconductor memory 618 and that the card-type disk drive 601 is equipped with a liquid crystal display control circuit 619, a liquid crystal display panel 602, a display on/off switch 603, a scroll switch 604 and a solar cell 605 with a view to realizing the display function independently from the external information processing apparatus 620. The nonvolatile semiconductor memory 618 used for storing a portion of the control program stores therein the data equivalent to the index data which are stored in a specific logical address area on the disk medium 610.

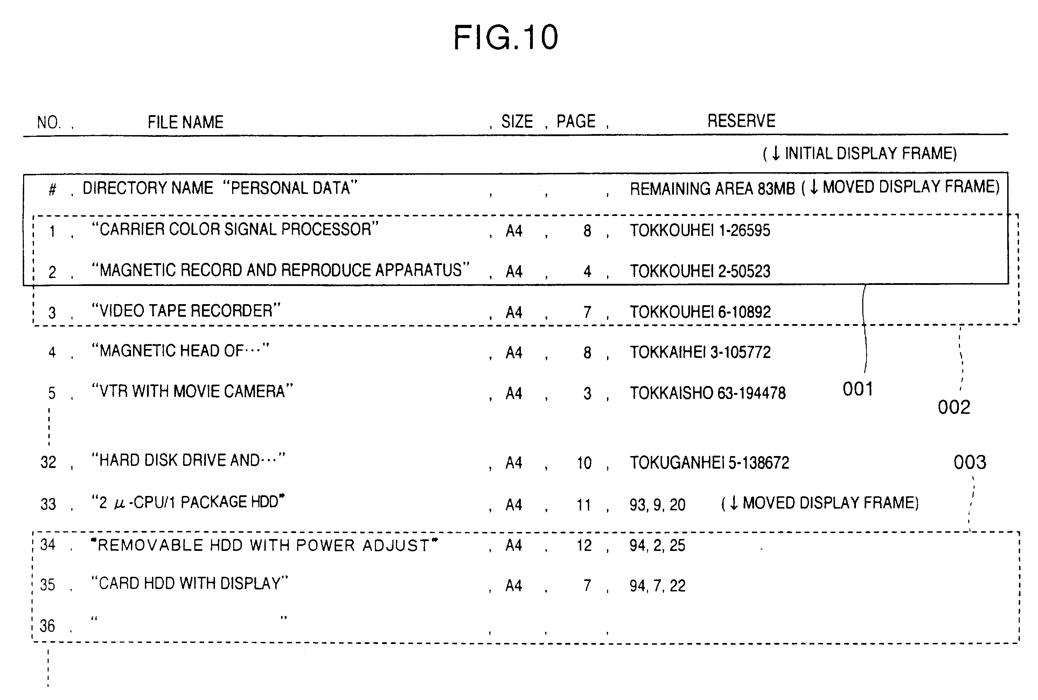

Figure 10 shows, only by way of example, index data. In the case of this example, it is assumed that the index data include serial numbers of patent documents, individual document names or identifiers, paper sizes, numbers of paper sheets, remarks or reserves and others are stored in the card-type disk drive. However, it goes without saying that the invention is never limited to the display of the index data mentioned above. The index data to be displayed may, of course, include file information, directory information, history information thereof as well as information concerning the inspection of the hierarchically higher rank system and/or the disk drive, information for maintenance, memorandums of the operator and/or the like.

When the microprocessor 614 of the card-type disk drive 601 accepts from the external information processing apparatus 620 a command for updating the index data stored in the disk medium 610 at a specific logical address area thereof, the microprocessor 614 updates (renews) not only the index data stored in the disk medium 610 but also the index data stored in the nonvolatile semiconductor memory 618 to thereby secure equivalence between the index data on the disk medium 610 and those stored in the nonvolatile semiconductor memory 618.

In the state where the card-type disk drive 601 is not connected to the external information processing apparatus 620, the solar cell 605 receives a light quantity greater than a predetermined level to supply the electric power to the nonvolatile semiconductor memory 618, the liquid crystal display 619 and the liquid crystal display panel 602 which is required for effectuating the display operation. In that case, the liquid crystal display control circuit 619 responds to the closing of the display on/off switch 603 to thereby read out initial part of the index data and character generating data from the nonvolatile semiconductor memory 618, whereby the signal indicating the character font to be displayed is sent to the liquid crystal display panel 602. Thus, the initial part of the index data is displayed on the liquid crystal display panel 602. Upon reception of the signal indicating that the scroll switch 604 is turned on, the liquid crystal display control circuit 619 reads out the index data from the nonvolatile semiconductor memory 618 to thereby displace the address by a predetermined distance. Thus, the index data being displayed on the liquid crystal display panel 602 is displaced or moved for a predetermined distance. By repeating the forward or backward scrolling operation by manipulating correspondingly the scroll switch 604, the location at which the index data is displayed can be moved as desired. Upon reception of the signal indicating the turn-off manipulation of the display on/off switch 603 after the display operation was started, the liquid crystal display control circuit 619 stops or ends the display operation.

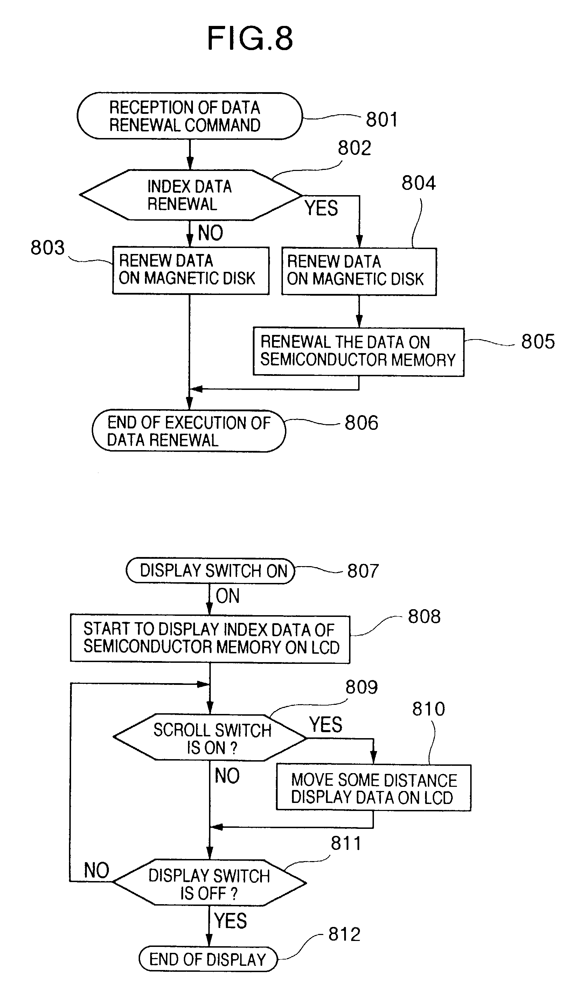

Figure 8 illustrates briefly a procedure for updating the index data stored in the nonvolatile semiconductor memory 618 as well as a procedure for displaying the index data elucidated above.

Figure 10 shows an example of an initial display frame 001 for displaying the index data and examples of the display frames 002 and 003 generated by moving the frame 001 through manipulation of the scroll switch. Here, it should be mentioned in conjunction with the card-type disk drive according to the first embodiment of the invention that in the index display operation, neither the spindle motor for rotating the disk medium nor the voice-coil motor associated with the rotary actuator is not driven, as can be seen from the explanation of the index display procedure. Accordingly, even a power source of a small capacity such as the solar cell can be used as the power source for effectuating the display of index data practically without any problem.

Furthermore, the card-type disk drive according to the first embodiment of the invention is advantageous from the manufacturing and economical viewpoints in the respect that there is no need for providing additionally a semiconductor memory IC dedicated for the display function because the display function dedicated memory is secured in the nonvolatile semiconductor memory 618 which is inherently destined for storing some control program(s).

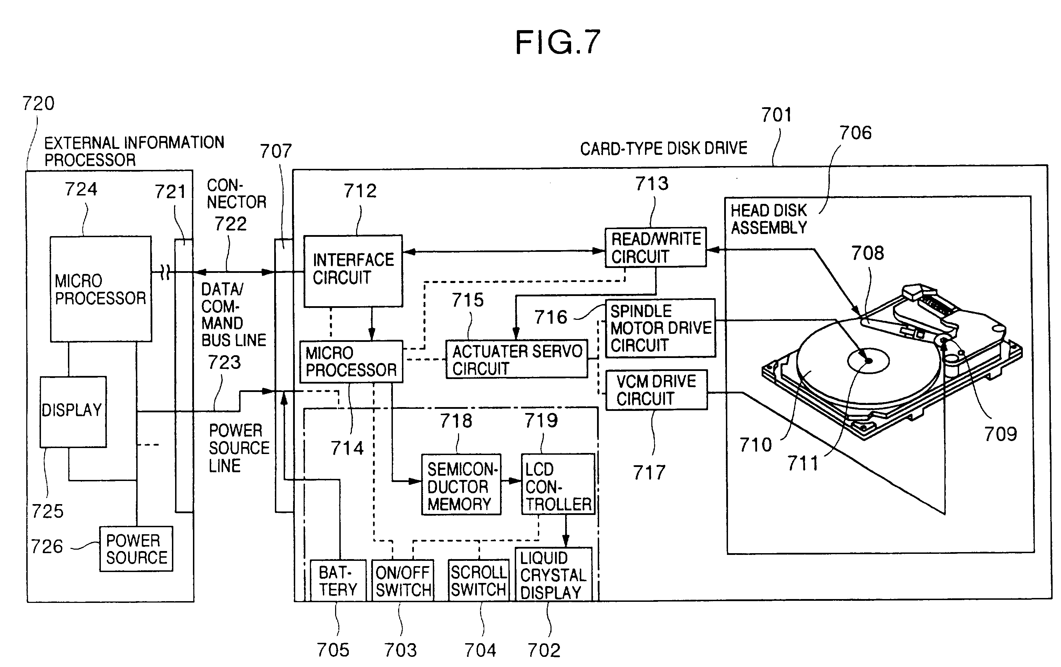

Next, description will be directed to a structure and operation of a card-type disk drive according to a second embodiment of the invention with emphasis being put on the features which differ from those of the card-type disk drive according to the third embodiment of the invention. Figure 7 shows in a block diagram a structure of the card-type disk drive according to the second embodiment of the invention.

As can be seen in Fig. 7, a cell 705 is employed in the card-type disk drive 701 in place of the solar cell for supplying electric power to all the circuits incorporated in the card-type disk drive 701. The cell 705 may be replaced by a battery.

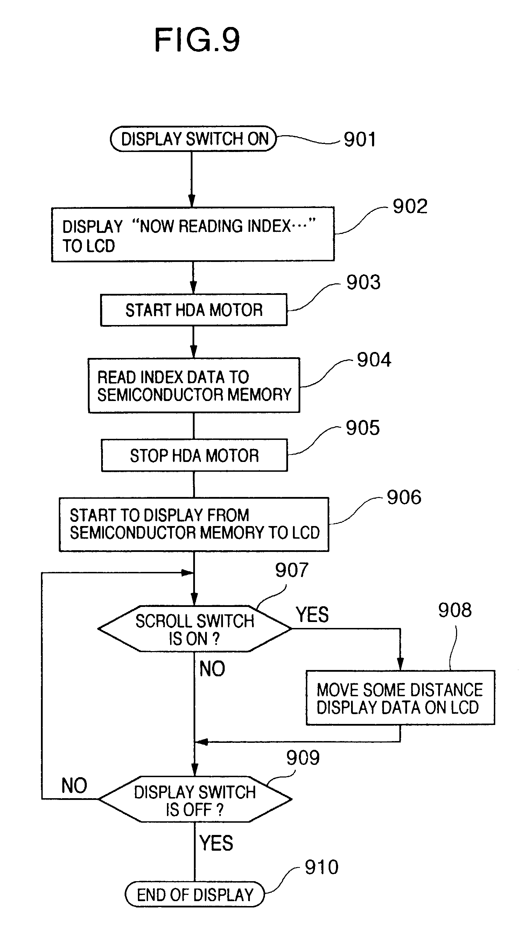

At first, it should be pointed out in conjunction with the card-type disk drive according to the second embodiment of the invention that the index data stored in a nonvolatile semiconductor memory 718 is not updated in linkage with the updating of the index data on the disk medium 710. Instead, a microprocessor 714 drives temporarily a motor of the head/disk assembly in response to the closing of the display on/off switch 703, as can be seen from Fig. 9 which illustrates an index data display procedure in the card-type disk drive according to the second embodiment of the invention, for thereby reading out the index data from the disk medium 710 onto the nonvolatile semiconductor memory 718.

Further, it is also to be mentioned that in the case of the instant card-type disk drive, no index data processing is performed on the nonvolatile semiconductor memory in linkage with the index data updating performed by the hierarchically higher rank system, differing from the card-type disk drive according to the first embodiment. Thus, the instant card-type disk drive can enjoy an advantage that the throughput is improved over the card-type disk drive of the first embodiment.

Parenthetically, it is also to be noted that the motor driving for the display operation is only temporary, whereby the electric power consumption can considerably suppressed. Thus, the power required by the instant card-type disk drive can be accommodated for by the cell or battery.

The invention has been described in conjunction with the card-type disk drive having a thickness of 10.5 mm in conformance to the provision "Type 3" of the PCMCIA Standards. However, the invention is never limited to any specific size but may find applications to the removable type disk drive in general.

In the foregoing description, the display in terms of characters is of concern. However, it should be appreciated that the teachings of the invention can equally be applied to disk drives designed for generating pictures or images or messages in voice. In that case, when the display of pictures or images is to be realized, a display element of higher definition than the display element dedicated for the character display should preferably be employed. Besides, image control facility, e.g. an LSI dedicated for the image control will have to be provided additionally. On the other hand, in case the message in voice is to be generated, a sound generating element equipped with a vibratory plate (e.g. speaker cone) producing no dusts will have to be hermetically mounted at a location corresponding to the display window. Such sound generating element may be implemented by using, for example, a piezoelectric element. Besides, it will be necessary to provide additionally or newly a sound signal control facility such as a sound control LSI.

As will now be apparent from the foregoing description, in the card-type disk drive according to the invention, it is possible to display and confirm in a much simplified and facilitated manner a large amount of information or data such as contents, history of records and/or memoranda of operator for recorded data of a disk medium having a large storage capacity even in such situation where there is available no hierarchically higher rank system to which the disk drive is to be connected substantially without any need for additionally providing an input/output unit dedicated to the input/output of display-relevant data to the disk drive.

Moreover, according to the teachings of the invention, the display function of the disk drive can be realized with a relatively low power consumption or economically without degrading the throughput of the disk drive in the ordinary operation.

Having described a preferred embodiment of the invention with reference to the accompanying drawings, it is to be understood that the invention is never limited to the illustrated embodiments and that various changes and modifications may occur to those skilled in the art without departing from the spirit and scope of the invention.

## Claims

1. A magnetic disk drive equipped with a display function, comprising:
a disk medium (610,710);
a spindle motor (611,711) for rotating said disk medium;
a head (608,708) for writing/reading data to/from said disk medium;
an actuator (609,709) for moving said head to a predetermined position on said disk medium;
a control circuit (615,715) for said actuator;
a semiconductor memory (618,718) for storing all or a part of data recorded in a predetermined data recording area on said disk medium;
a display panel including a display element (602,702) for displaying data of a predetermined memory area on said semiconductor memory;
an interface (107,207,307) for outputting data from said disk medium to an external information processing system;
switch means for controlling start or ending of data display operation;
a display power source (605,705) for supplying an electric power at least to said display element for displaying the data; and
means (614,714) for an update control function for updating the data stored in said predetermined memory area of said semiconductor memory in linkage with updating of data recorded in a predetermined data recording area on said disk medium.

2. A magnetic disk drive according to claim 1, wherein said switch means has a function for controlling move of a data display.

3. A magnetic disk drive according to claim 1, wherein the data recorded in a predetermined data recording area on said disk medium includes information concerning at least one of history of recording and operator's memoranda concerning the recorded data on said disk medium.

4. A magnetic disk drive according to claim 1, wherein said means for displaying the data of said predetermined memory area of said semiconductor memory is constituted by a liquid crystal display; and wherein said display power source is constituted by a solar cell (105).

5. A magnetic disk drive according to any one of claims 1 to 4, further including:
a supporting member (106,206) for supporting said actuator (609,709) ;
an electronic circuit substrate (1121) for supporting said control circuit; and
a cover (1123) having a window (1124) aligned with said display element (618,718).

6. A method of operating a magnetic disk drive, said magnetic disk drive having:
a disk medium (610,710);
a spindle motor (611,711) for rotating said disk medium;
a head (608,708) for writing/reading data to/from said disk medium;
an actuator (609,709) for moving said head to a predetermined position on said disk medium;
a control circuit (615,715) for said actuator;
a semiconductor memory (618,718) for storing all or a part of data recorded in a predetermined data recording area on said disk medium;
a display panel including a display element (602,702) for displaying data of a predetermined memory area on said semiconductor memory;
an interface (107, 207,307) for outputting data from said disk medium to an external information processing system for controlling start or ending of data display operation; and
a display power source (605,705) for supplying an electric power at least to said display element for displaying the data;
wherein the method comprises:
rotating the disk medium (610,710);
moving the head (608,708) for reading/writing data from/to said disk medium to a predetermined position on said disk medium;
storing a part or all of data recorded in a predetermined data recording area on said disk medium;
updating said stored data in linkage with updating of the data recorded in a predetermined data recording area on said disk medium;
disconnecting said disk medium drive apparatus equipped with a display function from a hierarchically higher rank apparatus; and
displaying said stored data by power from said display power source in response to operations of a switch for controlling start of data displaying operation, move of the display and ending of said display operation.

7. A method of operating a magnetic disk drive said magnetic disk drive having:
a disk medium (610, 710);
a spindle motor (611, 711) for rotating said disk medium;
a head (608, 708) for writing/reading data to/from said disk medium;
an actuator (609, 709) for moving said head to a predetermined position on said disk medium;
a control circuit (615, 715) for said actuator;
a semiconductor memory (618, 718) for storing all or a part of data recorded in a predetermined data recording area on said disk medium;
a display panel including a display element (602, 702) for displaying data of a predetermined memory area on said semiconductor memory;
an interface (107, 207, 307) for outputting data from said disk medium to an external information processing system for controlling start or ending of data display operation; and
a display power source (605, 705) for supplying an electric power at least to said display element for displaying the data;
wherein the method comprises:
rotating the disk medium (610,710);
moving the head (608, 708) for reading/writing data from/to said disk medium to a predetermined position on said disk medium;
disconnecting said disk medium drive apparatus equipped with a display function from a hierarchically higher rank apparatus;
rotating the disk medium (610, 710);
moving a head (608, 708) for reading/writing data form/to said disk medium to a predetermined position on said disk medium;
storing a part or all data recorded in a predetermined data recording area on said disk medium; and
displaying said stored data by power from said display power source in response to operations of a switch for controlling start of data displaying operation, move of the display and ending of said display operation.

## Patentansprüche

1. Magnetplattenantrieb mit Anzeigefunktion, umfassend
ein Plattenmedium (610, 710),
einen Spindelmotor (611, 711) zum Drehen des Plattenmediums,
einen Kopf (608, 708) zum Schreiben/Lesen von Daten auf das bzw. von dem Plattenmedium,
eine Stelleinrichtung (609, 709) zum Bewegen des Kopfes an eine vorbestimmte Stelle auf dem Plattenmedium,
eine Steuerschaltung (615, 715) für die Stelleinrichtung,
einen Halbleiterspeicher (618, 718) zum Speichern aller in einem vorbestimmten Datenaufzeichnungsbereich auf dem Plattenmedium aufgezeichneten Daten oder eines Teils davon,
ein Anzeigefeld mit einem Anzeigeelement (602, 702) zum Anzeigen von Daten eines vorbestimmten Speicherbereichs in dem Halbleiterspeicher,
eine Schnittstelle (107, 207, 307) zur Ausgabe von Daten von dem Plattenmedium an ein externes Informationsverarbeitungssystem,
eine Schalteinrichtung zum Steuern von Anfang oder Ende eines Datenanzeigevorgangs,
eine Anzeige-Energiequelle (605, 705) zur Zuführung von elektrischer Energie mindestens an das Anzeigeelement zum Anzeigen von Daten, und
eine Einrichtung (614, 714) für eine Aktualisier-Steuerfunktion zum Aktualisieren der in dem vorbestimmten Speicherbereich des Halbleiterspeichers gespeicherten Daten in Verbindung mit der Aktualisierung von in einem vorbestimmten Datenaufzeichnungsbereich auf dem Plattenmedium gespeicherten Daten.

2. Magnetplattenantrieb nach Anspruch 1, wobei die Schalteinrichtung eine Funktion zum Steuern von Bewegung einer Datenanzeige aufweist.

3. Magnetplattenantrieb nach Anspruch 1, wobei die in einem vorbestimmten Datenaufzeichnungsbereich auf dem Plattenmedium gespeicherten Daten Informationen bezüglich der Aufzeichnungshistorie und/oder Vermerke der Bedienungsperson bezüglich der aufgezeichneten Daten auf dem Plattenmedium enthalten.

4. Magnetplattenantrieb nach Anspruch 1, wobei die Einrichtung zur Anzeige von Daten des vorbestimmten Speicherbereichs des Halbleiterspeichers aus einer Flüssigkristallanzeige und die Anzeige-Energiequelle aus einer Solarzelle (105) besteht.

5. Magnetplattenantrieb nach einem der Ansprüche 1 bis 4 mit ferner
einem die Stelleinrichtung (609, 709) tragenden Tragelement (106, 206),
einem die Steuerschaltung tragenden Elektronikschaltungs-Substrat (1121), und
einem Deckel (1123) mit einem aus das Anzeigeelement (618, 718) ausgerichteten Fenster (1124).

6. Verfahren zum Betrieb eines Magnetplattenantriebs, der aufweist:
ein Plattenmedium (610, 710),
einen Spindelmotor (611, 711) zum Drehen des Plattenmediums,
einen Kopf (608, 708) zum Schreiben/Lesen von Daten auf das bzw. von dem Plattenmedium,
eine Stelleinrichtung (609, 709) zum Bewegen des Kopfes an eine vorbestimmte Stelle auf dem Plattenmedium,
eine Steuerschaltung (615, 715) für die Stelleinrichtung,
einen Halbleiterspeicher (618, 718) zum Speichern aller in einem vorbestimmten Datenaufzeichnungsbereich auf dem Plattenmedium aufgezeichneten Daten oder eines Teils davon,
ein Anzeigefeld mit einem Anzeigeelement (602, 702) zum Anzeigen von Daten eines vorbestimmten Speicherbereichs in dem Halbleiterspeicher,
eine Schnittstelle (107, 207, 307) zur Ausgabe von Daten von dem Plattenmedium an ein externes Informationsverarbeitungssystem zum Steuern von Anfang oder Ende eines Datenanzeigevorgangs, und
eine Anzeige-Energiequelle (605, 705) zur Zuführung von elektrischer Energie mindestens an das Anzeigeelement zum Anzeigen von Daten,
wobei in dem Verfahren:
das Plattenmedium (610, 710) gedreht wird,
der Kopf (608, 708) zum Lesen/Schreiben von Daten von dem bzw. auf das Plattenmedium an eine vorbestimmte Stelle auf dem Plattenmedium bewegt wird,
ein Teil oder alle der in einem vorbestimmten Datenaufzeichnungsbereich auf dem Plattenmedium gespeicherten Daten gespeichert werden,
die gespeicherten Daten in Verbindung mit einer Aktualisierung der in einem vorbestimmten Datenaufzeichnungsbereich auf dem Plattenmedium gespeicherten Daten aktualisiert werden,
das mit einer Anzeigefunktion ausgestattete Antriebsgerät des Plattenmediums von einem in der Hierarchie vorrangigen Gerät getrennt wird, und
entsprechend Betätigungen eines Schalters zur Steuerung des Beginns eines Datenanzeigevorgangs, Bewegung der Anzeige und Ende des Anzeigevorgangs die gespeicherten Daten durch Energie aus der Anzeige-Energiequelle angezeigt werden.

7. Verfahren zum Betrieb eines Magnetplattenantriebs, der aufweist:
ein Plattenmedium (610, 710),
einen Spindelmotor (611, 711) zum Drehen des Plattenmediums,
einen Kopf (608, 708) zum Schreiben/Lesen von Daten auf das bzw. von dem Plattenmedium,
eine Stelleinrichtung (609, 709) zum Bewegen des Kopfes an eine vorbestimmte Stelle auf dem Plattenmedium,
eine Steuerschaltung (615, 715) für die Stelleinrichtung,
einen Halbleiterspeicher (618, 718) zum Speichern aller in einem vorbestimmten Datenaufzeichnungsbereich auf dem Plattenmedium aufgezeichneten Daten oder eines Teils davon,
ein Anzeigefeld mit einem Anzeigeelement (602, 702) zum Anzeigen von Daten eines vorbestimmten Speicherbereichs in dem Halbleiterspeicher,
eine Schnittstelle (107, 207, 307) zur Ausgabe von Daten von dem Plattenmedium an ein externes Informationsverarbeitungssystem zum Steuern von Anfang oder Ende eines Datenanzeigevorgangs, und
eine Anzeige-Energiequelle (605, 705) zur Zuführung von elektrischer Energie mindestens an das Anzeigeelement zum Anzeigen von Daten,
wobei in dem Verfahren:
das Plattenmedium (610, 710) gedreht wird,
der Kopf (608, 708) zum Lesen/Schreiben von Daten von dem bzw. auf das Plattenmedium an eine vorbestimmte Stelle auf dem Plattenmedium bewegt wird,
das mit einer Anzeigefunktion ausgestattete Antriebsgerät des Plattenmediums von einem in der Hierarchie vorrangigen Gerät getrennt wird,
das Plattenmedium (610, 710) gedreht wird,
der Kopf (608, 708) zum Lesen/Schreiben von Daten von dem bzw. auf das Plattenmedium an eine vorbestimmte Stelle auf dem Plattenmedium bewegt wird,
ein Teil oder alle der in einem vorbestimmten Datenaufzeichnungsbereich auf dem Plattenmedium gespeicherten Daten gespeichert werden, und
entsprechend Betätigungen eines Schalters zur Steuerung des Beginns eines Datenanzeigevorgangs, Bewegung der Anzeige und Ende des Anzeigevorgangs die gespeicherten Daten durch Energie aus der Anzeige-Energiequelle angezeigt werden.

## Revendications

1. Mémoire à disque magnétique pourvue d'une fonction d'affichage, comportant :
un disque (610, 710) ;
un moteur à broche (611, 711) pour entraîner en rotation ledit disque ;
une tête (608, 708) pour écrire des données sur ledit disque et lire des données à partir de ce dernier ;
un actionneur (609, 709) pour déplacer ladite tête vers une position prédéterminée sur ledit disque ;
un circuit de commande (615, 715) pour ledit actionneur;
une mémoire à semi-conducteurs (618, 718) pour mémoriser tout ou partie des données enregistrées dans une zone d'enregistrement de données prédéterminée sur ledit disque ;
un panneau d'affichage incluant un élément d'affichage (602, 702) pour afficher les données d'une zone de mémoire prédéterminée de ladite mémoire à semi-conducteurs;
une interface (107, 207, 307) pour transférer des données dudit disque vers un système de traitement d'informations externe ;
des moyens de commutation pour commander le début ou la fin d'une opération d'affichage de données ;
une source d'alimentation électrique (605, 705) destinée à l'affichage pour alimenter en courant au moins ledit élément d'affichage destiné à afficher les données ; et
des moyens (614, 714) pour une fonction de commande de mise à jour pour mettre à jour les données mémorisées dans ladite zone de mémoire prédéterminée de ladite mémoire à semi-conducteurs en liaison avec la mise à jour des données enregistrées dans une zone d'enregistrement de données prédéterminée sur ledit disque.

2. Mémoire à disque magnétique selon la revendication 1, dans laquelle lesdits moyens de commutation ont une fonction pour commander le déplacement d'un affichage de données.

3. Mémoire à disque magnétique selon la revendication 1, dans laquelle les données enregistrées dans une zone d'enregistrement de données prédéterminée sur ledit disque incluent des informations concernant au moins un historique de l'enregistrement et un aide-mémoire de l'opérateur concernant les données enregistrées sur ledit disque.

4. Mémoire à disque magnétique selon la revendication 1, dans laquelle lesdits moyens pour afficher les données de ladite zone de mémoire prédéterminée de ladite mémoire à semi-conducteurs sont constitués d'un affichage à cristaux liquides ; et dans laquelle ladite source d'alimentation électrique destinée à l'affichage est constituée d'une cellule solaire (105).

5. Mémoire à disque magnétique selon l'une quelconque des revendications 1 à 4, comportant en outre :
un élément de support (106, 206) pour supporter ledit actionneur (609, 709) ;
un substrat de circuit électronique (1121) pour supporter ledit circuit de commande ; et
un couvercle (1123) comportant une fenêtre (1124) alignée avec ledit élément d'affichage (618, 718).

6. Procédé pour exploiter une mémoire à disque magnétique, ladite mémoire à disque magnétique comportant :
un disque (610, 710) ;
un moteur à broche (611, 711) pour entraîner en rotation ledit disque ;
une tête (608, 708) pour écrire des données sur ledit disque et lire des données à partir de ce dernier ;
un actionneur (609, 709) pour déplacer ladite tête vers une position prédéterminée sur ledit disque ;
un circuit de commande (615, 715) pour ledit actionneur ;
une mémoire à semi-conducteurs (618, 718) pour mémoriser tout ou partie des données enregistrées dans une zone d'enregistrement de données prédéterminée sur ledit disque ;
un panneau d'affichage incluant un élément d'affichage (602, 702) pour afficher les données d'une zone de mémoire prédéterminée sur ladite mémoire à semi-conducteurs;
une interface (107, 207, 307) pour transférer des données dudit disque vers un système de traitement d'informations externe pour commander le début ou la fin d'une opération d'affichage de données ;
une source d'alimentation électrique (605, 705) destinée à l'affichage pour alimenter en courant au moins ledit élément d'affichage destiné à afficher les données ;
le procédé consistant à :
entraîner en rotation le disque (610, 710) ;
déplacer la tête (608, 708), pour lire des données à partir dudit disque et écrire des données sur ce dernier, vers une position prédéterminée sur ledit disque ;
mémoriser tout ou partie des données enregistrées dans une zone d'enregistrement de données prédéterminée sur ledit disque ;
mettre à jour lesdites données mémorisées en liaison avec la mise à jour des données enregistrées dans une zone d'enregistrement de données prédéterminée sur ledit disque ;
déconnecter ladite mémoire à disque pourvue d'une fonction d'affichage d'un dispositif de rang hiérarchiquement supérieur ; et
afficher lesdites données mémorisées grâce au courant électrique délivré par ladite source d'alimentation électrique destinée à l'affichage en réponse à l'activation d'un commutateur servant à commander le début de l'opération d'affichage des données, le déplacement de l'affichage et la fin de ladite opération d'affichage.

7. Procédé pour exploiter une mémoire à disque magnétique, ladite mémoire à disque magnétique comportant :
un disque (610, 710) ;
un moteur à broche (611, 711) pour entraîner en rotation ledit disque ;
une tête (608, 708) pour écrire des données sur ledit disque et lire des données à partir de ce dernier ;
un actionneur (609, 709) pour déplacer ladite tête vers une position prédéterminée sur ledit disque ;
un circuit de commande (615, 715) pour ledit actionneur;
une mémoire à semi-conducteurs (618, 718) pour mémoriser tout ou partie des données enregistrées dans une zone d'enregistrement de données prédéterminée sur ledit disque ;
un panneau d'affichage incluant un élément d'affichage (602, 702) pour afficher les données d'une zone de mémoire prédéterminée de ladite mémoire à semi-conducteurs;
une interface (107, 207, 307) pour transférer des données dudit disque vers un système de traitement d'informations externe pour commander le début ou la fin d'une opération d'affichage de données ;
une source d'alimentation électrique (605, 705) destinée à l'affichage pour alimenter en courant électrique au moins ledit élément d'affichage destiné à afficher les données ;
le procédé consistant à :
entraîner en rotation le disque (610, 710) ;
déplacer la tête (608, 708), pour lire des données à partir dudit disque ou écrire des données sur ce dernier, vers une position prédéterminée sur ledit disque ;
déconnecter ladite mémoire à disque pourvue d'une fonction d'affichage d'un dispositif de rang hiérarchiquement supérieur ;
entraîner en rotation le disque (610, 710) ;
déplacer une tête (608, 708) pour lire des données à partir dudit disque ou écrire des données sur ce dernier vers une position prédéterminée sur ledit disque ;
mémoriser tout ou partie des données enregistrées dans une zone d'enregistrement de données prédéterminée sur ledit disque ; et
afficher lesdites données mémorisées grâce au courant électrique délivré par ladite source d'alimentation électrique destinée à l'affichage en réponse à l'activation d'un commutateur destiné à commander le début de l'opération d'affichage des données, le déplacement de l'affichage et la fin de ladite opération d'affichage.
